# FASCICULE DE BREVET EUROPEEN

(11) **EP 0 468 894 B1**
(45) Date de publication et mention de la délivrance du brevet: **12.10.1994**
(21) Numéro de dépôt: 91402100.1
(22) Date de dépôt: 26.07.1991
(51) Int. Cl.: B64C 23/08

(54) **Dispositif de sustentation aérienne verticale et aéronef comprenant un tel dispositif**
Auftrieberzeugende Vorrichtung und damit ausgerüstetes Luftschiff
Lifting device and aircraft so equipped

(30) Priorité: 27.07.1990 CA 2022087
(43) Date de publication de la demande: 29.01.1992
(73) Titulaire: Picard, Jean-Paul, Hull, Quebec (CA)
(72) Inventeur: Picard, Jean-Paul, Hull, Quebec (CA)
(74) Mandataire: Tanguy, Gilbert André

(56) Documents cités:
- WO-A-89/07073
- US-A- 2 417 358
- US-A- 3 630 470

## Description

Mon invention constitue un nouveau dispositif de sustentation aérienne permettant notamment le vol vertical d'un aéronef.

### DESCRIPTION DE L'ART ANTERIEUR

Cette invention recourt à l'effet décrit par Magnus (1854), qui stipule qu'un cylindre rotatif immergé en travers d'un courant sera soumis à une force perpendiculaire à ce courant. Pour être plus précis, une dépression apparaîtra à la surface du cylindre rotatif et cette dépression atteindra sa valeur maximale là où la surface du cylindre se déplace à peu près dans la même direction que le courant, le vecteur de portance étant à peu près perpendiculaire au courant et en direction opposée au cylindre.

Plusieurs inventions ont été faites où un cylindre rotatif était intégré dans le bord d'attaque ou dans l'extrados d'une aile d'avion classique. Ces inventions ne visaient qu'à augmenter la portance d'une aile ordinaire et ne concernaient aucunement le vol vertical qui est l'objet de la présente invention.

En 1942, Parlee C. Grose a inventé un aéronef à vol vertical (brevet U.S.;2,417,358). Dans ce brevet,
a) conformément à la description classique de l'effet Magnus, une portance est générée par des cylindres rotatifs immergés dans un courant;
b) les cylindres de Grose sont disposés par paires symétriquement opposées. Ils sont toujours disposés parallèlement à la carlingue;
c) comme le courant d'air est pompé directement par une soufflerie, l'effet de la sustentation est par le fait même indépendant de la vitesse de déplacement de l'aéronef. La portance étant indépendante du déplacement de l'appareil, il en résulte que celui-ci devient capable de voler sur place, verticalement.
d) à vitesse élevée, un tel aéronef qui serait aussi muni d'ailes pourrait être utilisé comme un avion ordinaire.

Il semble qu'aucune réalisation pratique de cette invention de Grose n'ait pu être réalisée.

En 1970, F.T. Elliott a obtenu le brevet U.S. 3,630,470 pour un aéronef recourant aux cylindres de Magnus. L'analyse de son invention montre une turbine située au sommet de l'appareil qui projette un jet d'air vers le bas, dans un conduit qui occupe le centre de l'aéronef. Ce conduit est subdivisé et les conduits secondaires rencontrent ensuite des coudes de 90 degrés qui réorientent radialement les jets dans une direction horizontale. Les cylindres de Magnus sont disposés immédiatement après ces coudes, immergés au milieu des conduits secondaires. Or, il est bien connu en hydrodynamique que dans un coude, le fluide se concentre sur la paroi externe de ce coude. Dans le cas de l'invention de Elliot, les coudes précités amèneraient l'air à se concentrer justement sous les cylindres, ce qui est exactement l'inverse de ce qu'il faut faire pour maximiser la dépression utile et la portance qui doivent apparaître justement sur le dessus du cylindre. Il semble qu'aucune réalisation pratique de cette invention de Elliot n'ait pu être réalisée.

En 1963, J. Barnes a obtenu le brevet U.S. 3,071,334 pour un aéronef à portance verticale. Avec un dispositif qui ressemble quelque peu à l'invention précitée de Elliott, Barnes a conçu un aéronef équipé en son centre d'un large conduit vertical occupé par une turbine orientée vers le bas. A la base de ce conduit, le flux d'air est subdivisé en deux et réorienté de 90 degrés vers l'horizontale, en direction des structures portantes inférieures. Ces structures portantes inférieures peuvent être soit des surfaces statiques incurvées (des extrados), soit des cylindres rotatifs (de Magnus). Cependant, à l'encontre de Elliott, Barnes écrit que le flux d'air pompé est dirigé uniquement sur le dessus des cylindres rotatifs. En dehors de cette mention, il n'y a aucune description détaillée de cette caractéristique importante. Pour leur part, les dessins montrent que l'air poussé vers le bas par la turbine rencontre une paroi horizontale parfaitement plate et alignée directement sur l'axe du cylindre rotatif. De ce fait, la paroi est perpendiculaire à la surface du cylindre au point où ils se rapprochent le plus. Les dessins montrent un écart plus ou moins large entre la fin de la paroi et la surface du cylindre; il n'y a aucune indication sur la façon d'empêcher une partie de l'air pompé (qui arrive au cylindre avec un angle droit) de passer par cet écart et de couler sous le cylindre. Ce concept de Barnes où l'air est supposé être forcé de couler par dessus le cylindre rotatif constitue une amélioration sur les inventions précédentes où l'air coulait sur les deux côtés du cylindre. Cependant, le fait que le flot d'air frappe le cylindre avec un angle droit, la présence d'un écart entre la surface du cylindre et la paroi d'orientation, l'absence de tout profilage vont maintenir une zone de pression sur la face amont du cylindre et vont engendrer des turbulences qui vont affecter négativement la portance. Du côté aval, l'absence de toute mesure pour faire décoller le flot d'air de la surface du cylindre combinée avec l'effet Coanda va amener le jet d'air à coller au cylindre et à en faire le tour. Ceci va étendre plus loin sur le côté et le dessous la zone de dépression, au détriment de la seule portance utile, celle générée sur le dessus du cylindre.

Barnes propose de contrôler un tel aéronef avec des volets situés juste au-dessus des cylindres sustentateurs inférieurs, distant à peu près de l'équivalent d'un rayon de la surface du cylindre. D'après les dessins, le bord d'attaque de ce volet est situé à environ 20-30 degrés en aval de la verticale de l'axe du cylindre. Un tel volet pourrait effectivement canaliser le flot d'air entre sa surface inférieure (intrados) et la surface du cylindre. Ce serait l'équivalent de diriger le flot dans un conduit, avec un contact extrrêmement imparfait avec l'atmosphère et, partant, sans dépression utile, sans portance. En d'autres termes ce serait l'équivalent de construire un biplan avec un écart de 30 cm entre les deux ailes; la zone de dépression sur l'extrados de l'aile inférieure serait inutile et ne créerait pas de portance utile. Pour revenir à l'invention de Barnes, le pilote, en abaissant les volets précités, diminuerait la portance des cylindres concernés d'une façon non négligeable. Cette manoeuvre ne provoquerait pas l'avancement de l'aéronef (comme Barnes le propose) mais le ferait plutôt piquer du nez.

Par ailleurs, les deux cylindres inférieurs de proue font carrément face à la direction d'avancement de l'aéronef. Aussitôt que l'aéronef avancera, le vent engendré par ce déplacement soufflera directement à l'encontre du flot d'air poussé par la turbine au-dessus du cylindre, diminuant ainsi considérablement la portance de ces cylindres de proue et provoquant un piqué.

Barnes a aussi conçu des cylindres sustentateurs situés au haut de l'aéronef, tout juste à côté de l'orifice d'admission de la turbine verticale. Il écrit que l'air aspiré par la turbine va d'abord balayer la surface supérieure de ces cylindres rotatifs supérieurs. Barnes ajoute : "pour obtenir une portance verticale substantielle la vitesse de l'air aspiré sera mieux dirigée sur le dessus des cylindres supérieurs par le recours à des plaques d'obturation (mobiles)."

Des expériences nombreuses et bien documentées montrent que l'air aspiré par une pompe ou une turbine ne peut pas être "orienté". Cette aspiration d'air dans une pompe ou une turbine génère un courant en forme d'éventail convergeant de toutes les directions vers l'orifice d'admission; ce courant s'étend toujours sur une très courte distance et sa vitesse décroît d'une façon presque exponentielle à mesure qu'on s'éloigne de l'orifice d'admission.

J'ai découvert qu'on peut utiliser l'effet Magnus avec une plus grande efficacité que ne le fait Grose en restreignant l'interaction entre le flux d'air et le cylindre rotatif à la seule section du cylindre où l'air projeté et la surface du cylindre se déplacent tous deux à peu près dans la même direction. Autrement dit, dans mon invention, le cylindre rotatif n'est plus immergé dans le flux d'air; dans mon invention, un bec (de faible hauteur mais aussi large que le cylindre) crache un jet d'air (en forme de "nappe") avec un angle incident presque tangentiel à la surface du cylindre (l'air et la surface se déplaçant dans le même sens). Ce jet colle à la surface du cylindre (effet Coanda). Un peu plus loin, une forme profilée que j'appelle une "gratte" effleure la surface du cylindre et fait décoller le jet d'air de la surface du cylindre. Ce bec et cette gratte délimitent un arc du cylindre que j'appelle la "plage utile". Sur cette plage utile, (qui joue un peu le même rôle que l'extrados d'une aile d'avion), le jet d'air crée une dépression, une portance orientée à peu près perpendiculairement à la corde de la plage utile. La portance engendrée par ce dispositif que j'ai inventé est beaucoup plus grande que la portance engendrée par un cylindre totalement immergé parce que la canalisation du flux d'air réalisée par mon invention supprime de la surface du cylindre toutes les autres zones de dépression ou de pression, toutes les portances qui ne sont pas orientées dans le même sens que la portance la plus grande, soit celle de la plage utile. En même temps, la canalisation restrictive du flux réalisée par mon invention supprime les zones de turbulances qu'on retrouve à l'arrière des cylindres immergés.

### ORIENTATION ET POSITION DUDIT BEC ET DE LADITE GRATTE

Pour un résultat optimum, ledit bec et ladite "gratte" seront orientés sensiblement tangentiellement au cylindre (de préférence pas plus de 5° par rapport à la tangente) et ils seront tous deux placés de préférence aussi près que possible de la surface du cylindre sans le toucher effectivement. En pratique un faible espace est nécessaire pour tenir compte des irrégularités de forme du cylindre et des vibrations dudit bec et de ladite "gratte, etc. Ce faible espacement et l'agencement quasi tangentiel assurent qu'un courant d'air s'écoule sans turbulence seulement sur la portion utile du cylindre rotatif. L'énergie consommée pour pomper le jet d'air est donc utilisée de façon optimale puisqu'elle ne sert plus à générer des effets contraires ou indifférents à la portance maximale comme c'est le cas avec un cylindre rotatif totalement immergé dans le flux (comme le fait Grose).

L'invention concerne un dispositif de sustentation aérienne verticale à cylindre rotatif de Magnus comportant des moyens pour diriger de l'air vers la surface dudit cylindre, caractérisé en ce que lesdits moyens pour diriger de l'air vers la surface dudit cylindre comprennent un bec cracheur d'éjection d'air, de faible hauteur et de largeur correspondant à celle dudit cylindre, agencé à proximité de la surface du cylindre et émettant un jet d'air en forme de nappe ayant une incidence faible par rapport à un plan tangent audit cylindre et voisin de l'extrémité dudit bec et en ce qu'il comporte en outre un élément profilé de décollement d'air dont un bord s'étendant parallèlement à une génératrice du cylindre, effleure la surface dudit cylindre, ledit bec et ledit élément profilé de décollement d'air étant agencés par rapport audit cylindre et espacés de façon que l'air sortant dudit bec s'écoule seulement sur une portion dudit cylindre où est engendrée une dépression utile.

L'orientation du vecteur de portance d'un tel cylindre rotatif (sustentateur) est à peu près perpendiculaire à la corde de la plage utile. Il varie en fonction d'abord de l'emplacement du bec et de l'élément profilé appelé "gratte", ensuite de la vitesse du jet et de la vitesse de rotation du cylindre. Il est évident que le plus souvent, tous ces facteurs seront réglés pour obtenir une portance optimale, i.e. verticale. Cependant, j'ai découvert des variations qui peuvent donner des effets utiles, surtout pour contrôler l'attitude, les déplacements et pour réaliser des dièdres stabilisateurs.(Voir ci-après)
La longueur optimale (exprimée en degrés) de cette plage utile (extrados) et par conséquent la distance entre le bec et la gratte sont déterminés par a) de la vitesse du jet d'air, b) de l'épaisseur du jet d'air, c) de la vitesse périphérique du cylindre, d) de la rugosité de la surface du cylindre. Toutes ces caractéristiques varient en fonction de la mission de l'aéronef. En outre, cette plage utile peut être réduite délibérément par le pilote ou le constructeur pour obtenir certains contrôles ou dièdres comme on le verra plus loin. Dans la pratique elle sera souvent de l'ordre d'une soixantaine de degrés.

L'invention concerne aussi un aéronef comportant au moins un et généralement plusieurs dispositifs de sustentation définis ci-dessus.

### DIAMETRE DES CYLINDRES.

Pour ce qui est du diamètre des cylindres rotatifs, il est défini par deux contraintes contradictoires.
I- Il déjà connu qu'avec les cylindres de Magnus, la vitesse périphérique des cylindres doit être plusieurs fois plus grande que la vitesse du jet soufflé. Or, si on accroit le diamètre d'un cylindre, on augmente non seulement la surface portante mais on peut du même coup accroître sa vitesse périphérique sans accroître pour autant le nombre de tours-minute du cylindre. Ce nombre restreint de tours-minute constitue donc un avantage pratique en ce qui concerne la construction des roulements etc. Il est donc intéressant d'obtenir une vitesse périphérique élevée et une surface portante plus grande simplement en donnant un diamètre important au cylindre plutôt qu'en augmentant le nombre de tours-minute. Cependant, plus un cylindre est large, plus il est encombrant et lourd, ce qui n'est pas toujours pratique pour construire en aéronef.
II- Par contre, si on augmente le nombre de tours-minute du cylindre d'une façon importante jusqu'à ce que la vitesse périphérique du cylindre soit 3 ou 4 fois plus grande que la vitesse du jet, on obtient, en consommant assez peu d'énergie, un coefficient de portance remarquable de 8Cx. Cependant, à de tels régimes (possiblement 7000 tours-minute et plus), les cylindres et leurs roulements seront soumis à des contraintes considérables et seront par conséquent coûteux à construire et à entretenir.

Le choix du diamètre des cylindres découlera donc d'un compromis qui sera influencé surtout par le coût de cylindres et de roulements performants et, d'autre part, par la préoccupation d'éviter une surface frontale trop grande. Il va de soi qu'il faut installer aux extrémités de tels cylindres des disques qui dépassent la surface du cylindre afin d'empêcher l'air ambiant situé aux extrémités du cylindre d'être attiré par la dépression régnant à la surface du cylindre. De tels disques ont déjà été décrits par Betz et Prandtl (1925)

### ANGLE DE L'AXE DES CYLINDRES.

Dans un aéronef sustenté par mon invention, les cylindres porteurs peuvent être disposés dans un plan parallèle à l'axe principal de la carlingue ou, plus pratiquement, parallèle au plan du plancher de la carlingue. Cependant, deux raisons peuvent parfois justifier de donner aux cylindres un angle différent de celui du plancher;
a) pour obtenir un dièdre, comme décrit plus bas, et
b) quand les cylindres servent non seulement à la sustentation mais aussi à l'avancement de l'aéronef, il y a intérêt à incliner l'ensemble des cylindres vers l'avant (comme le disque du rotor d'un hélicoptère) de façon à ce que la carlingue reste horizontale en vol de croisière pour ainsi diminuer la traînée aérodynamique. En retour de cet avantage, il faut, bien sûr, a) que la carlingue soit en position cabrée au décollage, en vol stationnaire et à l'atterrissage et que b) le train d'atterrissage facilite le contact avec le sol dans cette position cabrée (grâce à un train avant plus long que le train arrière).

### DISPOSITIF ACCESSOIRES

J'ai en outre inventé plusieurs dispositifs accessoires indispensables pour une réalisation pratique de ce principe. Ces nouveaux dispositifs viennent s'ajouter à certains dispositifs encore valables déjà inventés par Grose. Pour rendre compréhensible le fonctionnement pratique de mon invention, j'ai intégré dans le présent texte certains de ces dispositifs. Il va de soi que ces derniers ne seront que mentionnés et qu'ils seront tous dûment identifiés comme tels.

### PLAGE LATERALE

Sur un cylindre consacré surtout à la portance verticale, une zone marginale située sur le côté du cylindre peut être consacrée à la portance horizontale en y installant dans un plan vertical un bec et une gratte qui définissent une plage utile verticale qui engendre un vecteur horizontal. Un tel vecteur horizontal peut être utile surtout pour manoeuvrer un tel aéronef sans incliner son assiette.
(Ex: pour manoeuvrer l'aéronef à l'atterrissage.)

### DISPOSITIFS ANTI-TURBULENCES

Un jet d'air projeté précisément et exclusivement sur le dessus d'un cylindre rotatif est soumis à deux sources de turbulences, soit a) par son contact avec l'air ambiant qui est statique, immobile et b) par son contact avec la surface du cylindre qui conformément à la théorie établie, doit se déplacer plusieurs fois plus vite que le jet. Ces turbulences créent des variations cycliques importantes de la portance. Plus la plage utile est longue, plus les turbulences se développent.

J'ai découvert qu'on peut amoindrir ces turbulences et optimiser la portance
a) en insérant dans le flux des vannes rectificatrices,
b) ou en divisant le flux pompé en deux et en injectant au-dessus du bec qui crache le jet principal un second flux moins rapide mais qui amoindrit la friction entre, d'une part, l'air pompé (projeté) à vitesse maximale directement sur le cylindre et, d'autre part, l'air statique au-dessus du cylindre,
c) ou en divisant le flux pompé en deux et en injectant une partie de ce flux par en second bec disposé en aval du bec principal pour raccourcir l'aire qui facilite le développement des turbulences.

### DISPOSITIFS POUR PROTEGER LES JETS.

Dans un aéronef équipé de cylindres sustentateurs décrits plus haut, il est indispensable que la zone située au-dessus de la plage soufflée soit en contact avec l'atmosphère, si on veut que la dépression engendrée sur le cylindre se traduise par une portance utile. Mais en créant ce contact entre la surface soufflée et l'air ambiant, il faut éviter que le vent créé par le déplacement de l'aéronef ne vienne perturber la surface soufflée et amoindrir la portance
NOTE: Les dessins de Grose montrent qu'il n'a pas vu ce problème des perturbations et son texte n'aborde pas ce sujet particulier.

J'ai découvert qu'on peut réaliser ce contact avec l'air ambiant en évitant les perturbations extérieures néfastes en entourant le système sustentateur de parois solides dans lesquelles sont aménagées des persiennes. Le contact entre l'atmosphère et l'air ambiant à l'intérieur des parois se fait par ces persiennes. Ces persiennes doivent être disposées de façon à être exposées le moins possible aux effets du vent apparent créé par l'avancement de l'aéronef; elles seront donc placées de façon à ne pas faire face directement au vent. En plus, ces persiennes seront incurvées vers l'arrière de l'aéronef.

Afin de remplir ces deux fonctions d'équilibre et d'écoulement, les persiennes seront disposées ainsi: a) une première série en sont des jets soufflés afin d'alimenter les courants secondaires qui seront entraînes par induction par les jets soufflés. b) Une seconde série de persiennes sera disposée en aval des surfaces soufflées, à la fois pour permettre la sortie des résidus de jets pompés et aussi pour permettre que se maintienne un équilibre entre l'atmosphère et l'intérieur des parois.

### DIEDRES

J'ai découvert 3 dispositifs différents permettant de donner un dièdre stabilisateur inhérent à mon invention et chacun de ces 3 dispositifs fonctionne aussi bien latéralement (anti-roulis) que longitudinalement (anti-tangage)
a) quand 2 cylindres sont disposés symétriquement de part et d'autre du centre de gravité, on peut faire converger légèrement leur portance verticale respective pour créer un dièdre stabilisateur inhérent. Selon que les cylindres sont disposés latéralement ou longitudinalement, un tel dièdre peut aussi bien être conçu pour prévenir le roulis que le tangage. Cette convergence des portances peut être obtenue aussi bien en inclinant l'axe des cylindres qu'en inclinant la corde de leur plage utile (un effet qu'on obtient en déplaçant simultanément le bec cracheur et la gratte).

### DIEDRE STABILISATEUR PAR CONES

J'ai découvert qu'on peut donner à un cylindre (ou à une paire de cylindres) un dièdre stabilisateur en ajoutant aux extrémités d'un cylindre horizontal des sections de cône (le cylindre prend alors l'allure d'un fuseau). La portance engendrée sur la surface de chacune de ces sections de cône converge vers son alter ego et crée un dièdre stabilisateur anti-roulis ou anti-tangage selon que ces cylindres-fuseaux sont disposés latéralement ou longitudinalement.

### MODULES

Sauf exception, chaque aéronef sustenté par mon invention comportera plusieurs modules sustentateurs comprenant un système de sustentation complet comme décrit plus haut, i.e. un cylindre rotatif, un ou plusieurs becs cracheurs du jet soufflé, une gratte, des persiennes de sortie et d'entrée, des vannes rectificatrices etc.. La longueur de ces modules est variable selon la mission de l'appareil.

### L'EMPLACEMENT DES MODULES

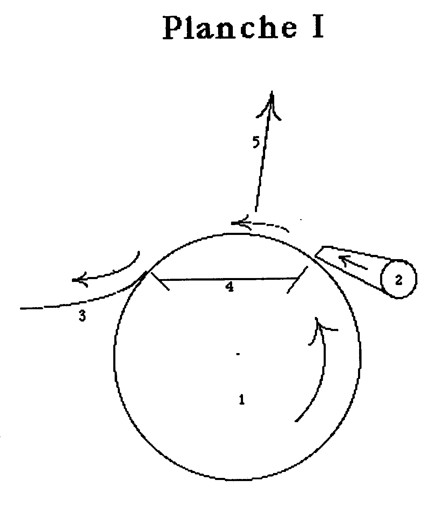

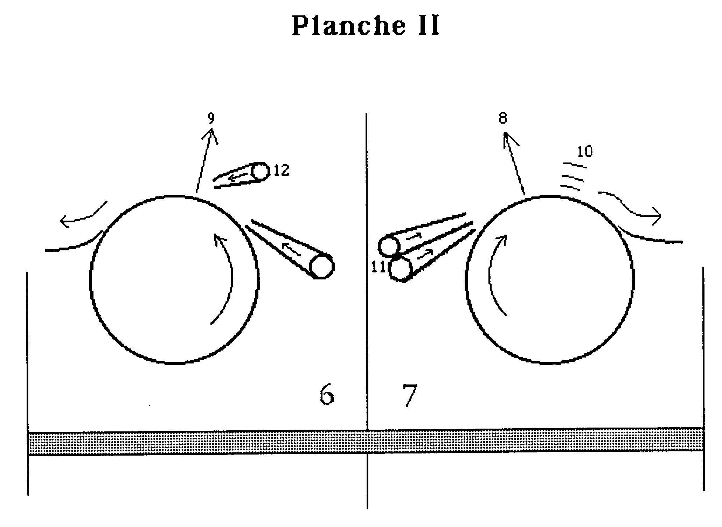

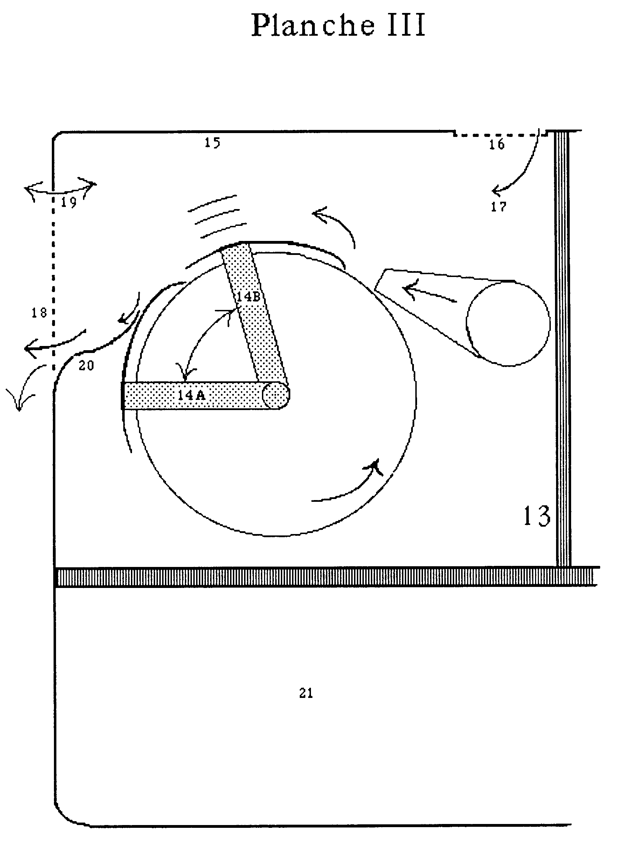

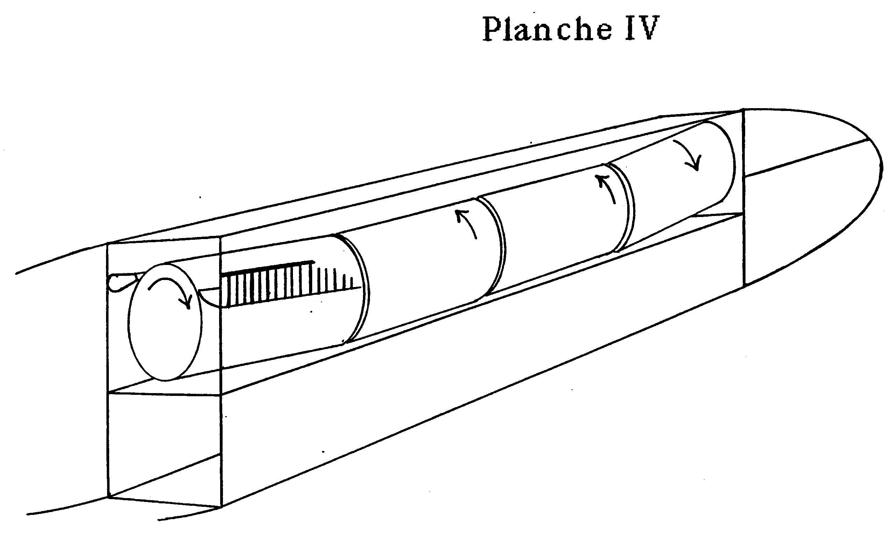

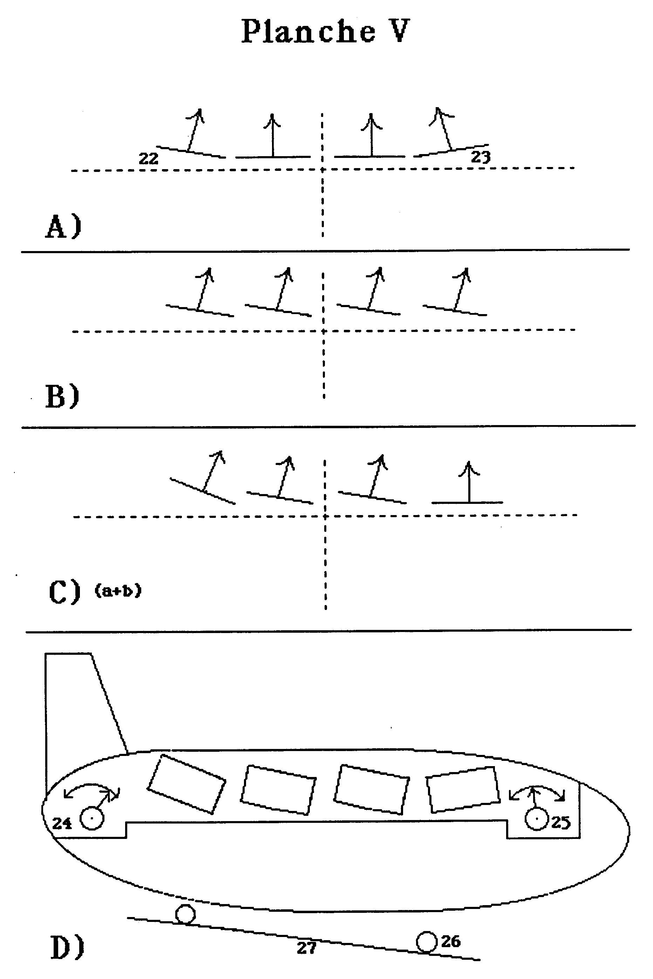

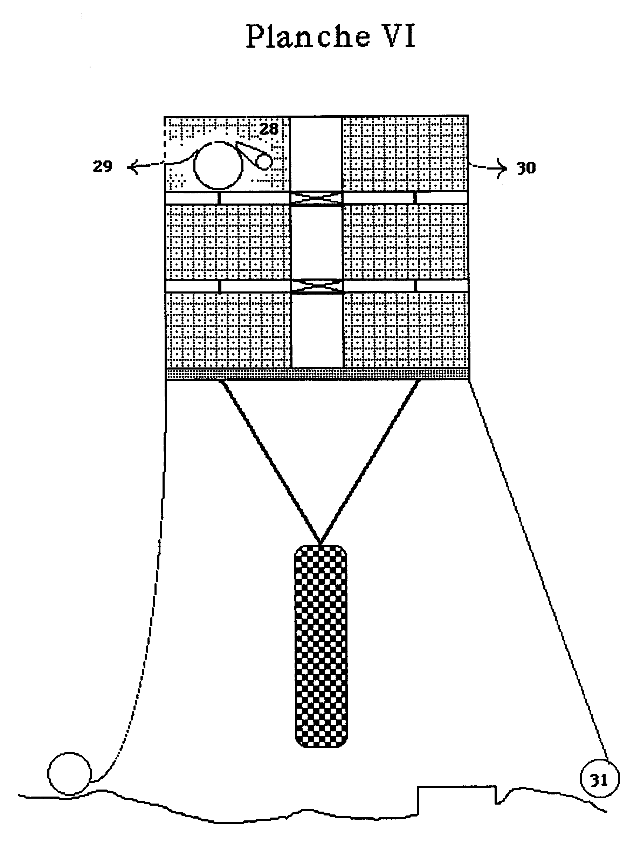

La disposition des modules sustentateurs doit répondre aux exigences suivantes qui sont soit impératives, soit optionnelles.
a) pour permettre un vol stationnaire (équilibré), il est impératif que les modules soient disposés en équilibre de part et d'autre du centre de gravité pour créer à la fois un équilibre longitudinal (proue-poupe) et transversal (babord-tribord).
   NOTE : l'analyse de la figure 2 du brevet de Grose montre que cette exigence lui a échappé. Comme on peut présumer que son centre de gravité coïncide avec le premier quart de la corde de son aile classique, il faut constater que 75% de la longueur des cylindres rotatifs sont en arrière du centre de gravité. L'expression "centre de gravité" n'apparaît pas dans son texte.
b) pour diminuer la surface frontale de l'aéronef, il est souhaitable que la majorité des cylindres soient disposés longitudinalement, dans le même axe que la carlingue. (Grose avait trouvé ceci).
c) pour donner un équilibre inhérent à l'aéronef, il est souhaitable que la majorité des "plages soufflées" des cylindres soient situées au-dessus du centre de gravité, ce qui donne une structure "en pendule".
d) en soufflant sur les dessus des cylindres, les jets pompés non seulement créent une portance verticale, mais en même temps, ces jets créent des poussées horizontales résiduelles. Pour obtenir un vol vraiment stationnaire, il est souhaitable d'orienter géométriquement les différents modules de façon à ce que leurs poussées horizontales résiduelles s'équilibrent et s'annulent.
e) dans un aéronef dont la mission est le transport de charges lourdes, sans préoccupation majeure pour la vitesse de déplacement (ex: grue volante), les modules de sustentation ont intérêt à être carrément empilés les uns au-dessus des autres en les éloignant juste assez pour que leurs orifices (persiennes) d'alimentation et de sortie ne se nuisent pas. La superposition des modules sustentateurs permettra de les relier par des structures "en tension" plus légères que les structures cantilever.
f) pour compenser les déplacements avant-arrière du centre de gravité d'un aéronef ou pour contrôler l'attitude de la carlingue, il est possible d'ajouter à l'avant et à l'arrière de la carlingue des modules de compensation disposés transversalement. Sur ces modules contrôlés indépendamment l'un de l'autre, le pilote peut faire varier aussi bien l'intensité de la portance (en contrôlant le débit du jet ou déplaçant la gratte) que l'orientation de la portance (en déplaçant simultanément le bec cracheur et la gratte).

### EMPLACEMENT DES CHARGES UTILES.

Si les charges utiles doivent être disposées à l'intérieur de la carlingue, deux options principales s'offrent au concepteur. D'abord, il y a intérêt à disposer les charges utiles directement sous les modules sustentateurs. Cette disposition permet de recourir à des structures en tension directe, sans porte-à-faux, et donc plus fiables et plus légères que les structures portantes. Par contre, cette disposition avec un étage supérieur de modules sustentateurs et un étage inférieur pour les charges utiles se trouve à augmenter la surface frontale. Par conséquent, dans les aéronefs où on priorise une réduction de la surface frontale, les modules sustentateurs et les zones contenant les charges utiles pourront être disposés dans un même axe, i.e. sur un seul étage, en étant reliés les uns aux autres par une structure portante semi-monocoque ou cantilever

### NOTE PREALABLE SUR LES DESSINS:

Dans cette invention, la nature du système de pompage de l'air, sa source d'énergie, son emplacement et la façon d'amener l'air pompé aux becs peuvent varier à l'infini selon la mission de l'aéronef et sont indifférents au principe de l'invention. Comme de nombreuses technologies déjà existantes et parfaitement éprouvées peuvent remplir ces fonctions, il n'est pas jugé utile d'y faire référence d'avantage dans les dessins. La même chose s'applique aux moteurs qui font tourner les cylindres et aux modes de transmission de l'énergie des moteurs aux cylindres (par courroies, hydraulique, pneumatique, etc)

La planche I représente le principe de base de cette invention.

La planche II représente en même temps a) des dispositifs pour diminuer les turbulences des jets soufflés, b) une des méthodes géométriques d'annulation des poussées résiduelles horizontales des jets, c) et un des dièdres stabilisateurs
La Planche III représente un module sustentateur qui illustre à la fois a) le mode de contrôle par gratte et b) les parois et les persiennes de protection et d'évacuation des jets.

La planche IV représente des modules disposés en une seule rangée qui illustrent une autre méthode géométrique l'annulation de la poussée horizontale des jets.

La planche V représente a) plusieurs modes d'inclinaisons possibles des modules et b) le rôle des modules compensateurs.

La planche VI représente l'application du principe à une grue volante.

Dans la planche I, nous pouvons voir en (1), un cylindre tournant dans le sens de la flèche à plusieurs milliers de tours-minute. En (2), un bec crache un jet d'air presque tangentiel qui colle au cylindre (effet Coanda). La surface du cylindre se déplace au moins 4 fois plus vite que le jet d'air, dans la même direction que celui-ci. En (3), une gratte profilée décolle le jet de la surface du cylindre. La "plage utile" (4) est cette zone de la surface du cylindre comprise entre le bec et la gratte; elle est un peu l'équivalent de l'extrados sur une aile classique. Le vecteur de portance (5) est à peu près perpendiculaire à la corde de la plage utile. Le cylindre rotatif, son bec cracheur et sa gratte profilée constituent l'essence de cette invention. Pour la réalisation pratique d'un aéronef, la sustentation sera assurée par plusieurs modules de sustentation distincts qui chacun comporteront ces trois éléments fondamentaux précités et des dispositifs accessoires décrits ci-après.

La planche II représente une coupe transversale d'un aéronef (vu vers l'avant) comportant deux rangées parallèles de modules de sustentation (6et 7). Les becs de ces modules soufflant symétriquement en directions opposées, leurs poussées résiduelles horizontales s'annulent ainsi pendant que leurs portances verticales s'additionnent. Ceci constitue l'une des façons d'annuler les poussées horizontales des becs cracheurs; l'autre façon est décrite à la planche IV. En outre, comme les plages utiles ont été inclinées légèrement l'une vers l'autre, leur portance respective (8) et (9) converge, ce qui crée un dièdre stabilisateur inhérent anti-roulis. Le module de tribord (7) comporte une vanne rectificatrice (10) qui diminue les turbulences du jet. Le module de tribord comporte aussi en (11) deux becs superposés qui crachent 2 jets stratifiés. Le jet supérieur étant moins rapide, cela contribue à diminuer les turbulences. Le module de bâbord (6) comporte aussi en (12) un second bec en aval qui sert à raviver le flux et à diminuer les turbulences. Il est entendu que l'asymétrie de ces deux modules ne sert qu'à simplifier l'illustration du présent texte.

Dans la planche III, on voit un module bâbord (13) qui représente un raffinement des modules (6 ou 7) vus dans la planche précédente. Cette vue nous montre une coupe transversale (gauche-droite) en regardant vers l'avant; le module de tribord n'est que suggéré. En (14-a), on voit une gratte mobile en position éloignée, ce qui définit une plage utile de dimensions maximales. En 14-b, la même gratte mobile a été rapprochée du bec (par le pilote), ce qui définit une plage utile très diminuée, entraînant une portance inférieure au poids de l'appareil.

On voit aussi en (15) des parois qui protègent les jets contre le vent du déplacement. En (16) se trouvent les persiennes par où est admis l'air qui alimentera les courants induits (17) entraînes par les jets soufflés. En (18), des persiennes laissent sortir les jets soufflés après qu'ils aient rempli leur fonction sur la plage utile. Ces persiennes sont en outre assez étendues pour permettre aussi que s'établisse en (19) un équilibre entre la pression à l'intérieur des parois et la pressionatmosphérique. On peut remarquer en (20) une paroi qui aide à diriger vers l'extérieur le jet d'air déjà défléchi par la gratte. La bouche d'aspiration de la soufflerie pourrait aussi être située à la place de cette paroi afin de bénéficier de l'énergie résiduelle des jets après leur déflexion par la gratte. La charge utile est placée en (21), directement sous les modules porteurs.

La planche IV représente un aéronef où les modules de sustentation sont disposés longitudinalement, mais dans une seule rangée. Les flèches indiquent que deux modules ont un jet qui s'écoule horizontalement dans un sens alors que les deux autres crachent leurs jets exactement en sens opposé, ce qui équilibre les poussées résiduelles horizontales sans affecter la portance verticale.

La planche V représente 3 diagrammes de portance d'un aéronef vu de côté et un dessin synthétisant ces concepts. Dans chacun des schémas, nous pouvons voir des barres et des vecteurs (ex:22) qui symbolisent une rangée de quatre cylindres sustentateurs principaux alignés longitudinalement, (il importe peu que cette rangée visible dissimule ou non une éventuelle seconde rangée parallèle à la rangée visible).

Dans le graphique A, le constructeur a relevé d'une façon convergente l'axe des cylindres avant et arrière (22 et 23), ce qui diminue légèrement leur portance pratique mais ce qui donne en retour un dièdre stabilisateur inhérent anti-tangage très utile.

Dans le graphique B, le constructeur a incliné tous les 4 cylindres d'une façon égale vers l'avant. Cette mesure (empruntée à l'inclinaison du rotor des hélicoptères) permet d'utiliser un surcroît de portance des cylindres (commandé par le pilote) pour obtenir une composante horizontale des vecteurs de portance, ce qui, à son tour, va permettre de faire avancer l'aéronef tout en gardant la carlingue horizontale (afin de diminuer la traînée aérodynamique). Il y a un prix à payer pour cet avantage; pour un vol stationnaire, pour le décollage et pour l'atterrissage, il faut que la résultante des vecteurs de portance soit parfaitement verticale (sans composante horizontale), ce qui implique forcément que la carlingue soit alors en position cabrée et que le train d'atterrissage avant (voir le dessin D-26) soit préférablement rallongé en conséquence. La ligne de référence (27) sous le train d'atterrissage représente un sol qui serait horizontal au moment de l'atterrissage, l'aéronef étant cabré.

Dans le graphique C, les caractéristiques de A (dièdre) sont toutes superposées à celles de B (avancement horizontal) pour obtenir un aéronef qui à la fois avance bien et soit stable longitudinalement. Cette disposition serait très stable en vol purement vertical mais favoriserait le piqué du nez en vol rapide. C'est pour prévenir cette tendance que dans le dessin D, le module sustentateur avant a été relevé pour conserver un dièdre stabilisateur. Il s agit ici du dispositif le plus recommandé pour l'utilisation de cette invention. Dans le dessin D, on voit également à la proue et la poupe de l'aéronef deux modules de compensation (24 et 25) disposés latéralement (gauche-droite). Les flèches de 24 et 25 indiquent que le pilote peut faire varier aussi bien l'intensité que l'orientation du vecteur de portance de ces modules.

La planche VI représente une grue où les modules sustentateurs (tel 28) sont empilés les uns au dessus des autres en même temps qu'ils sont opposés face à face pour équilibrer les poussées horizontales des jets. Les deux flèches (29 et 30) illustrent les jets résiduels horizontaux s'échappant en direction opposée pour s'annuler. Pour certaines manoeuvres (besoin de précision, vents adverses, etc), cette grue peut être positionnée au-dessus de son objectif final par le recours à des treuils (31) installés au sol. Il va de soi qu'au moment où la grue ne porte aucune charge, les modules sustentateurs situés sous le centre de gravité de la grue allégée voient leur puissance diminuée ou supprimée.

### CONTROLE DE L'APPAREIL.

Il existe 8 sources possibles de contrôle d'un tel aéronef. J'en ai inventé 5. Trois peuvent être transposées de l'invention de Grose et sont rappelées ici pour faciliter la compréhension globale de l'aéronef.
1) (Grose) "Un tel aéronef peut aussi être équipé d'ailes classiques et de moteurs classiques" (ou même d'un ramjet). En vol de croisière, il est alors contrôlé comme un avion ordinaire, les cylindres sustentateurs pouvant ne servir qu'au décollage et à l'atterrissage et en vol stationnaire. Entre temps, les modules cylindriques sont arrêtés et les persiennes que j'ai inventées sont closes pour diminuer la traînée. Les modes de contrôle qui suivent reposent tous sur des variations de l'orientation ou des variations de l'intensité des vecteurs de portance des différents cylindres.
2) (Grose) "On peut changer l'intensité de la portance d'un cylindre en changeant sa vitesse de rotation". Cependant, comme les cylindres tournent à plusieurs milliers de tours-minute, leur inertie est très importante. En conséquence, toute variation de leur vitesse de rotation (et de leur portance) sera très lente. De plus, un ralentissement des cylindres affecte sérieusement le coefficient de portance sans économiser proportionnellement autant d'énergie. Pour ces raisons, ce mode de contrôle sera très peu utilisé.
3) (Grose) "Contrôle par la variation de la vitesse des jets soufflés". Ce mode de contrôle, plus vif que le précédent mais beaucoup moins rapide que le suivant, sera utilisé surtout pour appliquer les décisions du pilote s'appliquant à moyen terme, (ex: taux d'ascension ou de descente)

Fin du rappel des modes de Grose. Les modes suivants sont de mon invention

### 4-Contrôle par la gratte de décollement.

A la commande du pilote, la gratte qui fait décoller le jet soufflé à la fin de la plage utile peut être mobile, suivre une course qui frôle la surface du cylindre et s'approcher du bec cracheur du jet jusqu'à y toucher si cela est nécessaire. Naturellement, ce rapprochement de la gratte vers le bec diminue la surface de la plage utile et diminue d'autant la portance, allant jusqu'à annuler totalement la portance si la gratte rejoint le bec. Secondairement, cette diminution de la plage utile s'accompagne d'une réorientation progressive du vecteur de portance affecté dont le constructeur et le pilote doivent tenir compte. Comme les mouvements de cette gratte peuvent être très rapides tout en requérant très peu d'énergie, ceux-ci constitueront la méthode favorite de contrôle de cette invention. Ex: les jets soufflent au maximum; les cylindres tournent à leur vitesse optimum mais les grattes sont rapprochées des becs ou même touchent aux becs: la portance du (ou des) module(s) ainsi affecté (s)est donc nulle. En une fraction de seconde, le pilote peut repousser les grattes en bout de course et il obtient presque instantanément la portance maximum. Tout ceci, sans imposer le moindre "choc" au moteur. Aucun autre aéronef ne possède cette versatilité, cette réserve de portance accessible instantanément.

### 5-Bec et gratte mobiles

Le bec et sa gratte associée peuvent se déplacer ensemble, à l'unisson, au gré du pilote. Ceci entraîne une réorientation du vecteur de la portance sans affecter son intensité.

### 6-Petites plages soufflées latérales.

Une petite plage utile et toutes ses composantes (petit bec, petite gratte, etc.) peuvent être disposées "sur le côté" d'un plus grand cylindre qui pour le reste, est consacré surtout à la portance verticale. Une telle petite plage utile verticale pourra engendrer un vecteur de portance horizontale qui sera utile surtout pour contrôler l'aéronef.

Les plages utiles latérales créent sur demande du pilote des vecteurs horizontaux. Comme elles sont séparées du système de sustentation verticale, elles peuvent être utilisées sans affecter d'aucune façon l'attitude de l'aéronef ni son état d'équilibre vertical. Ceci devrait simplifier le travail du pilote au décollage et à l'atterrissage.

### 7-Modules de composition.

Les modules sustentateurs de compensation précités (290) installés éventuellement à l'avant et à l'arrière de l'aéronef doivent y être équipés de contrôles très versatiles aussi bien de l'intensité de leur portance que de l'orientation de cette portance (par exemple en ayant chacun un bec mobile et une gratte mobile comme décrit plus haut en (294). Le pilote peut déplacer soit la gratte seule, soit la gratte et le bec ensemble. Ces deux modules de compensation peuvent servir d'abord à compenser les déplacements du centre de gravité, permettant des variations importantes de l'emplacement de ce centre (dans le sens avantarrière). Ces modules pourraient servir aussi à contrôler l'attitude de l'aéronef, et à donner une stabilité dihédrale anti-tangage à l'aéronef par une légère convergence de leur portance. Il est évident que ces trois fonctions ne pourraient être utilisées simultanément que par le recours à un ordinateur.

### 8-Persiennes orientables.

En dotant les persiennes de sorties d'un mécanisme d'orientation, on peut les utiliser pour orienter les jets résiduels qui viennent de balayer les cylindres rotatifs. Les variations dans l'orientation de ces jets permettent un certain contrôle de l'aéronef.

### MODULES MOTEURS

Finalement, des modules sustentateurs décrits plus haut pourront être inclinés de 90 degrés et être installés sur le devant d'un aéronef. A ce moment, comme le vecteur de portance sera horizontal, ces modules seront des modules moteurs (plutôt que sustentateurs). Pour de tels modules moteurs, il arriver que le vent du déplacement de l'aéronef coïncidera avec la direction du jet pompé; dans un tel cas, il ne sera pas nécessaire d'installer une paroi de protection et des persiennes au dessus du cylindre.

## Revendications

1. Dispositif de sustentation aérienne verticale à cylindre rotatif de Magnus (1) comportant des moyens pour diriger de l'air vers la surface dudit cylindre, caractérisé en ce que lesdits moyens pour diriger de l'air vers la surface dudit cylindre comprennent un bec cracheur d'éjection d'air (2), de faible hauteur et de largeur correspondant à celle dudit cylindre, agencé à proximité de la surface du cylindre et émettant un jet d'air en forme de nappe ayant une incidence faible par rapport à un plan tangent audit cylindre et voisin de l'extrémité dudit bec et en ce qu'il comporte en outre un élément profilé de décollement d'air (3) dont un bord s'étendant parallèlement à une génératrice du cylindre, effleure la surface dudit cylindre, ledit bec et ledit élément profilé de décollement d'air étant agencés par rapport audit cylindre et espacés de façon que l'air sortant dudit bec s'écoule seulement sur une portion (4) dudit cylindre où est engendrée une dépression utile.

2. Aéronef comprenant au moins un dispositif de sustentation aérienne verticale à au moins un cylindre rotatif de Magnus (1) selon la revendication 1 ledit cylindre rotatif comportant des moyens pour diriger de l'air vers la surface dudit cylindre et étant caractérisé en ce que lesdits moyens pour diriger de l'air vers la surface dudit cylindre comprennent un bec cracheur d'éjection d'air (2) de faible hauteur et de largeur correspondant à celle dudit cylindre, agencé à proximité de la surface du cylindre et émettant un jet d'air en forme de nappe ayant une incidence faible par rapport à un plan tangent audit cylindre et voisin de l'extrémité dudit bec, ledit dispositif de sustentation comportant en outre un élément profilé de décollement d'air (3) dont un bord s'étendant parallèlement à une génératrice du cylindre effleure la surface dudit cylindre, ledit bec et ledit élément profilé de décollement d'air étant agencés par rapport audit cylindre et espacés de façon que l'air sortant dudit bec s'écoule seulement sur une portion (4) dudit cylindre où est engendrée une dépression utile.

3. Aéronef selon la revendication 2, caractérisé en ce qu'il comporte plusieurs modules sustentateurs comprenant chacun un dispositif de sustentation précité et en ce que ces modules sustentateurs sont disposés en équilibre de part et d'autre de son centre de gravité.

4. Aéronef selon la revendication 3, caractérisé en ce que la majorité desdits modules sustentateurs ont leurs centres de portance disposés au dessus de son centre de gravité.

5. Aéronef selon la revendication 3 ou 4, caractérisé en ce que des modules situés de part et d'autre dudit centre de gravité sont disposés de façon à faire converger leurs vecteurs de portance, pour engendrer un dièdre stabilisateur anti-roulis ou anti-tanguage.

6. Aéronef selon la revendication 5, caractérisé en ce que les axes desdits cylindres de Magnus de ces modules sont légèrement inclinés pour engendrer un dièdre stabilisateur.

7. Aéronef selon la revendication 5, caractérisé en ce que les cordes des plages utiles desdits cylindres de Magnus de ces modules sont légèrement inclinés pour engendrer un dièdre stabilisateur.

8. Aéronef selon l'une des revendications 3 à 5, caractérisé en ce que le cylindre de Magnus d'un tel module est pourvu de parties coniques à ses extrémités, pour engendrer un dièdre stabilisateur.

9. Aéronef selon l'une des revendications 2 à 8, caractérisé en ce qu'un tel dispositif de sustentation comporte deux becs cracheurs superposés, le bec situé au dessus de celui qui émet directement sur le cylindre émettant un jet moins rapide.

10. Aéronef selon l'une des revendications 2 à 8, caractérisé en ce qu'un tel dispositif de sustentation comporte, en aval du bec cracheur précité, bec projecteur secondaire et/ou des vannes rectificatrices.

11. Aéronef selon l'une des revendications 2 à 10 caractérisé en ce que lesdits modules sont disposés en une ou deux rangées parallèles à une direction longitudinale de sa carlingue.

12. Aéronef selon l'une des revendications 2 à 10, caractérisé en ce que de tels modules sont empilés les uns au-dessus des autres.

13. Aéronef selon l'une des revendications 3 à 11, caractérisé en ce que les modules sont orientés pour que leurs poussées horizontales résiduelles s'annulent mutuellement, par exemple en étant agencés en paires se faisant face lorsqu'ils sont disposés selon deux rangées ou en ayant des orientations alternées lorsqu'ils sont disposés selon une seule rangée.

14. Aéronef selon l'une des revendications 2 à 12, caractérisé en ce qu'il comporte des moyens de commande d'intensité et/ou d'orientation de la portance du ou des modules, par exemple des moyens pour faire varier la distance entre ledit bec et ledit élément profilé de façon à faire varier la plage utile du cylindre et/ou des moyens pour déplacer conjointement ledit bec et ledit élément profilé de façon à orienter le vecteur de portance correspondant.

15. Aéronef selon l'une des revendications 2 à 14, caractérisé en ce qu'il comporte des parois de protection formant plafonds éloignées des jets balayant les cylindres pour ne pas être balayés par ces jets,
- des parois de protection verticales disposées de chaque côté des cylindres et aux extrémités des modules, et
- des ouvertures aménagées dans les parois précitées et munies de persiennes incurvées.

16. Aéronef selon l'une des revendications 2 à 15, caractérisé en ce qu'il comporte des modules de compensation à caractéristiques ajustables, installés transversalement à ses extrémités, pour compenser les déplacements de son centre de gravité ou pour déplacer son centre de portance.

17. Aéronef selon l'une des revendications 3 à 16, caractérisé en ce qu'il comporte, sur le côté de certains cylindres, de petits modules verticaux ou un ensemble composé d'un petit bec et d'un petit élément profilé précité définissant sur ledit cylindre une petite plage utile verticale, pour améliorer le contrôle de l'aéronef au décollage ou à l'atterrissage

18. Aéronef selon l'une des revendications 2 à 17, caractérisé en ce qu'il comporte un ensemble supplémentaire comprenant un cylindre de Magnus, un bec cracheur et une surface profilée précitée, ledit ensemble étant agencé de façon que la plage utile du cylindre et le vecteur de portance soient face à la direction normale d'avancement de l'aéronef.

## Claims

1. A device to provide vertical aerial lift by means of a rotating Magnus cylinder (1) incorporating devices for directing air towards the surface of the said cylinder, in which the said devices for directing air towards the surface of the said cylinder comprise an air-blowing nozzle (2) of small dimension in height and of a dimension in width corresponding to that of the said cylinder, affixed close to the surface of the cylinder and emitting a sheet of air having a low angle of incidence with respect to a plane which is both tangent to the said cylinder and near the extremity of the said nozzle, and in which there is furthermore a profiled air-diverting vane (3) of which one edge, extending in a direction parallel to the generatrix of the cylinder, sweeps the surface of the said cylinder, the said nozzle and said profiled air-diverting vane being so arranged in relation to the said cylinder and so spaced that the air emitted by the said nozzle flows exclusively on one portion (4) of the said cylinder at which place a useful negative pressure is generated.

2. An aircraft comprising at least one device to provide vertical aerial lift by means of a rotating Magnus cylinder (1) as claimed in claim 1, the said rotating cylinder incorporating devices for directing air towards the surface of the said cylinder, and in which the said devices for directing air towards the surface of the said cylinder comprise an air-blowing nozzle (2) of small dimension in height and of a dimension in width corresponding to that of the said cylinder, affixed close to the surface of the cylinder and emitting a sheet of air having a low angle of incidence with respect to a plane which is both tangent to the said cylinder and near the extremity of the said nozzle, the said device to provide lift comprising furthermore a profiled air-diverting vane (3) one edge of which, extending in a direction parallel to the generatrix of the cylinder, sweeps the surface of the said cylinder, said nozzle and said profiled air-diverting vane being so arranged in relation to the said cylinder and so spaced that the air emitted by the said nozzle flows exclusively on one portion (4) of the said cylinder at which place a useful negative pressure is generated.

3. An aircraft as claimed in claim 2, in which there are several lift modules each incorporating a device to provide aerial lift as aforesaid and in which these lift modules are distributed so as to be in equilibrium with respect to its centre of gravity.

4. An aircraft as claimed in claim 3, in which the majority of the said lift modules have centres of lift disposed above its centre of gravity.

5. An aircraft as claimed in claim 3 or 4, in which lift modules located around the said centre of gravity are disposed so that their lift vectors converge and thereby generate a stabilizing anti-roll and anti-yaw dihedral.

6. An aircraft as claimed in claim 5, in which the axes of the said Magnus cylinders of the modules are slightly inclined so as to generate a stabilizing dihedral.

7. An aircraft as claimed in claim 5, in which the chords of the useful segments of the said Magnus cylinders of the modules are slightly inclined so as to generate a stabilizing dihedral.

8. An aircraft as claimed in any any one of claims 3 to 5, in which the Magnus cylinder of such a module is fitted with conical parts at its extremities so as to generate a stabilizing dihedral.

9. An aircraft as claimed in any one of claims 2 to 8, in which such a lift device comprises two superposed nozzles, the nozzle situated above the one which emits air directly on the cylinder emitting air at a lesser rate.

10. An aircraft as claimed in any one of claims 2 to 8, in which such a lift device includes a secondary nozzle and/or rectifying vanes aft of the aforesaid nozzle.

11. An aircraft as claimed in any one of claims 2 to 10, in which the said modules are disposed in one or two rows parallel to a longitudinal direction of its fuselage.

12. An aircraft as claimed in any one of claims 2 to 10, in which such modules are stacked one above the other.

13. An aircraft as claimed in any one of claims 3 to 11, in which the modules are oriented so that their residual horizontal thrusts cancel out each other, for example by being installed in pairs facing one another when they are disposed in two rows or by being installed with alternating orientations when they are disposed in a single row.

14. An aircraft as claimed in any one of claims 2 to 12, in which there are ways of regulating the intensity and/or the lift orienation of the module or modules, for example means of varying the distance between the said nozzle and the said profiled air-diverting vane so as to cause a variation in the useful segment of the cylinder and/or means of jointly displacing the said nozzle and said profiled air-diverting vane so as to orient the corresponding lift vector.

15. An aircraft as claimed in any one of claims 2 to 14, in which there are protective walls positioned as ceilings distant from the sheets of air sweeping the cylinders so as not to be swept themselves by these sheets of air.
-- vertical protective walls disposed on either side of the cylinders and at the extremities of the modules, and
--- openings arranged in the aforesaid walls and incorporating incurved louvers.

16. An aircraft as claimed in any one of claims 2 to 15, in which there are compensatory modules with adjustable characteristics, installed transversally at its extremities to compensate for shifts in the aircraft's centre of gravity and to adjust its centre of lift.

17. An aircraft as claimed in any one of claims 3 to 16, in which there are, on the side of some cylinders, small vertical modules or an assembly consisting of a small nozzle and a small profiled vane as aforesaid constituting on the said cylinder a small vertical useful segment so as to improve control of the aircraft during takeoff and landing.

18. An aircraft as claimed in any one of claims 2 to 17, in which there is a supplementary assembly consisting of a Magnus cylinder, a nozzle, and a profiled vane as aforesaid, the said assembly being so disposed that the useful segment of the cylinder and the lift vector face the normal direction of movement of the aircraft.

## Patentansprüche

1. Vertikale Auftriebsvorrichtung mit rotierendem Magnuszylinder (1) und Einrichtungen, um einen Luftstrom auf die Oberfläche des besagten Zylinders zu lenken,
dadurch gekennzeichnet, daß besagte Einrichtungen, um der Luftstrom auf die Oberfläche des besagten Zylinders zu lenken, aus einer Luftstrahldüse (2) geringer Höhe und gleicher Breite wie der des besagten Zylinders und einer profilierten Leitschaufel (3) bestehen. Die Luftstrahldüse ist in der Nähe der Zylinderoberfläche plaziert und gibt einen mantelförmigen Luftstrahl ab, der in einem spitzen Winkel zu der Tangentialebene des besagten Zylinders eintritt. Der parallel zu der Zylindermantellinie verlaufende Rand der profilierten Leitschaufel berührt die Oberfläche des besagten Zylinders, wobei besagte Düse und besagte Leitschaufel so zu dem besagten Zylinder hin plaziert und auseinander liegen, daß der aus der Düse abgegebene Luftstrom nur über den Bereich (4) des besagten Zylinders strömt, wo ein nutzbarer Unterdruck entsteht.

2. Luftfahrzeug mit mindenstens einer vertikalen Auftriebsvorrichtung und einem rotierenden Magnuszylinder (1) nach Anspruch 1, wobei besagter Zylinder mit Einrichtungen ausgerüstet ist, um einen Luftstrom auf die Oberfläche des besagten Zylinders zu lenken,
dadurch gekennzeichnet, daß besagte Einrichtungen, um den Luftstrom auf die Oberfläche des besagten Zylinders zu lenken, aus einer Luftstrahldüse (2) geringer Höhe und gleicher Breite wie der des besagten Zylinders und einer profilierten Leitschaufel (3) bestehen. Die Luftstrahldüse ist in der Nähe der Zylinderoberfläche plaziert und gibt einen mantelförmigen Luftstrahl ab, der in einem spitzen Winkel zu der Tangentialebene des besagten Zylinders eintritt. Der parallel zu der Zylindermantellinie verlaufende Rand der profilierten Leitschaufel berührt die Oberfläche des besagten Zylinders, wobei besagte Düse und besagte Leitschaufel so zu dem besagten Zylinder hin Plaziert und auseinander liegen, daß der aus der Düse abgegebene Luftstrom nur über den Bereich (4) des besagten Zylinders strömt, wo ein nutzbarer Unterdruck entsteht.

3. Luftfahrzeug nach Anspruch 2,
dadurch gekennzeichnet, daß es mehrere Auftriebsmodule mit jeweils einer Auftriebsvorrichtung vorweist und daß diese Auftriebsmodule im Gleichgewicht zum Massenmittelpunkt des Luftfahrzeugs beidseits angeordnet sind.

4. Luftfahrzeug nach Anspruch 3,
dadurch gekennzeichnet, daß die Mehrzahl der besagten Auftriebsmodule ihren Auftriebsmittelpunkt über dem Massenmittelpunkt des Luftfahrzeugs liegen haben.

5. Luftfahrzeug nach Anspruch 3 oder 4,
dadurch gekennzeichnet, daß die im Gleichgewicht zu besagtem Massenmittelpunkt beidseits gelegenen Module so angeordnet sind, daß ihre Auftriebsvektoren konvergieren und somit ein Zweiflach mit Stabilisationseffekt bilden, das Schlingern und Gieren des Luftfahrzeuges verhindert.

6. Luftfahrzeug nach Anspruch 5, dadurch gekennzeichnet, daß die Achsen der besagten Magnuszylinder dieser Module geringfügig geneigt sind, um somit ein Zweiflach mit
Stabilisationseffekt zu bilden.

7. Luftfahrzeug nach Anspruch 5, dadurch gekennzeichnet, daß die Kreissehnen des nutzbaren Bereiches
der besagten Magnuszylinder dieser Module geringfügig geneigt sind, um somit ein Zweiflach mit Stabilisationseffekt zu bilden.

8. Luftfahrzeug nach einem der Ansprüche 3 bis 5,
dadurch gekennzeichnet, daß der Magnuszylinder eines jeweiligen Moduls an seinen Enden konisch ausgebildet ist, um somit ein Zweiflach mit Stabilisationseffekt zu bilden.

9. Luftfahrzeug nach einem der Ansprüche 2 bis 8,
dadurch gekennzeichet, daß besagte Auftriebsvorrichtung zwei übereinanderliegende Luftstrahldüsen vorweist, wobei die Düse, die über der liegt, die direkt auf den Zylinder bläst, einen langsameren Luftstrahl abgibt.

10. Luftfahrzeug nach einem der Ansprüche 2 bis 8,
dadurch gekennzeichnet, daß eine besagte Auftriebsvorrichtung unter der vorher erwähnten Luftstrahldüse, eine zweite Düse und/oder Leitschaufeln aufweist, die den Luftstrahl korrigierend in mehrere parallel fließende Luftströme umwandeln.

11. Luftfahrzeug nach einem der Ansprüche 2 bis 10,
dadurch gekennzeichnet, daß die besagten Module in einer oder zwei parallel zur Längsrichtung des Luftfahrzeugrumpfes verlaufenden Reihen angeordnet sind.

12. Luftfahrzeug nach einem der Ansprüche 2 bis 10,
dadurch gekennzeichnet, daß die besagten Module übereinanderliegend angeordnet sind.

13. Luftfahrzeug nach einem der Ansprüche 3 bis 11,
dadurch gekennzeichnet, daß die Module so ausgerichtet sind, daß ihr Horizontalrestschub sich gegenseitig aufhebt, wie zum Beispiel, daß sie sich paarweise gegenüber stehen, wenn sie in zwei Reihen, oder einmal in einer und dann in entgegengesetzter Richtung stehen, wenn sie in einer einzigen Reihe angeordnet sind.

14. Luftfahrzeug nach einem der Ansprüche 2 bis 12,
dadurch gekennzeichnet, daß es Einrichtungen zur Regelung der Stärke und/oder der Richtung des Auftriebs des bzw. der Module aufweist, wie zum Beispiel Einrichtungen, die die Entfernung zwischen besagter Luftstrahldüse und besagter Leitschaufel ändern, um somit den nutzbaren Bereich des Zylinders zu variieren, und/oder Einrichtungen, die besagte Düse und besagte Leitschaufel zusammen versetzen, um somit den jeweiligen Auftriebsvektor auszurichten.

15. Luftfahrzeug nach einem der Ansprüche 2 bis 14,
dadurch gekennzeichnet, daß es Schutzdecken und -wände aufweist, die weit genug von den über die Zylinder hinfließenden Luftströmen entfernt sind, um nicht von besagten Strömen weggeblasen zu werden;
- vertikale Schutzwände und -decken besitzt, die beidseits eines Zylinders und am Ende der Module angeordnet sind;
- öffnungen hat, die in den vorhin erwähnten Wänden und Decken liegen und mit nach rückwärts gebogenen Jalousien ausgerüstet sind.

16. Luftfahrzeug nach einem der Ansprüche 2 bis 15,
dadurch gekennzeichnet, daß es anpassungsfähige Ausgleichsmodule aufweist, die querliegend zu seinen Enden installiert sind, um somit Verschiebungen des Massenmittelpunktes des Luftfahrzeugs auszugleichen oder seinen Auftriebsmittelpunkt zu verlegen.

17. Luftfahrzeug nach einem der Ansprüche 3 bis 16,
dadurch gekennzeichnet, daß auf der Seite einiger bestimmter Zylinder vertikale Miniaturmodule bzw. ein aus einer Miniaturdüse und Miniaturleitschaufel bestehendes Set aufweist, die auf den besagten Zylindern einen nutzbaren vertikalen Miniaturbereich schaffen, um somit die Steuerung des Luftfahrzeugs beim Start oder bei der Landung zu verbessern.

18. Luftfahrzeug nach einem der Ansprüche 2 bis 17,
dadurch gekennzeichnet, daß es ein zusätzliches Set aufweist, das aus einem Magnuszylinder, einer Luftstrahldüse und einer profilierten Leitschaufel besteht, wobei besagtes Set so plaziert ist, daß der nutzbare Bereich des Zylinders und der Auftriebsvektor zur normalen Bewegungsrichtung des Luftfahrzeugs hin gelegen ist bzw. wirkt.
